# EUROPÄISCHE PATENTSCHRIFT

(11) **EP 2 794 354 B1**
(45) Veröffentlichungstag und Bekanntmachung des Hinweises auf die Patenterteilung: **14.12.2016**
(21) Anmeldenummer: 12812171.2
(22) Anmeldetag: 17.12.2012
(51) Int. Cl.: B60R 11/02, B60K 35/00, B60K 37/06

(54) **VERFAHREN ZUR ANZEIGE EINER INFORMATION IN EINEM FAHRZEUGINNENRAUM**
METHOD FOR DISPLAYING INFORMATION IN A VEHICLE INTERIOR
PROCÉDÉ D'AFFICHAGE D'UNE INFORMATION À L'INTÉRIEUR D'UN VÉHICULE

(30) Priorität: 20.12.2011 DE 102011121617
(43) Veröffentlichungstag der Anmeldung: 29.10.2014
(73) Patentinhaber: Audi AG, 85045 Ingolstadt (DE)
(72) Erfinder: GIESLER, Björn, 85080 Gaimersheim (DE); SCHADECK, Michael, 85049 Ingolstadt (DE); HEINEMANN, Patrick, 85092 Kösching (DE); STÜMPER, Stefan, 85072 Eichstätt (DE)
(74) Vertreter: Thielmann, Frank
(86) Internationale Anmeldenummer: PCT/EP2012/005200
(87) Internationale Veröffentlichungsnummer: WO 2013/091815

(56) Entgegenhaltungen:
- DE-A1- 10 039 131
- US-A1- 2011 006 892
- US-A1- 2011 144 857

## Beschreibung

Die Erfindung betrifft ein Verfahren zur Anzeige einer Information in einem Fahrzeuginnenraum mittels einer Anzeigeeinrichtung eines Kraftfahrzeugs, wobei zur Anzeige der Information auf der sich in zumindest eine horizontale Richtung erstreckenden Anzeigeeinrichtung mittels einer benutzerseitigen Bedienvorgabe zumindest ein horizontaler, eine geringere räumliche Ausdehnung als die Anzeigeeinrichtung aufweisender Unterbereich der Anzeigeeinrichtung bestimmt wird, dessen Position auf der Anzeigeeinrichtung zumindest entlang der horizontalen Richtung benutzerseitig mittels der Bedienvorgabe vorgegeben wird, wobei der zumindest eine Unterbereich zur Anzeige der Information selektiv angesteuert wird.

Aus dem Stand der Technik sind Kraftfahrzeuge mit Fahrerassistenzsystemen, insbesondere Infotainment-Systemen bekannt, welche Komfort-, Sicherheits- und/oder Informationsfunktionen kombinieren. Dabei wird beispielsweise als Navigationshilfe eine digitale Straßenkarte auf einer zentralen Anzeigeeinrichtung, die beispielsweise in einer Instrumententafel oder in einer Mittelkonsole des Kraftfahrzeugs integriert ist, ausgegeben. Dieselbe Anzeigeeinrichtung wird zur Wiedergabe von Mediendateien, wie beispielsweise Filmen, Musiktiteln oder Fernsehsendungen verwendet. Dazu weist die Anzeigeeinrichtung typischerweise Mittel zur Ausgabe von akustischen Signalen, wie insbesondere Lautsprecher, auf.

Zur Unterhaltung von Fahrzeuginsassen können mehrere Anzeigeeinrichtungen vorgesehen sein, die beispielsweise in rückwärtigen Bereichen von Fahrzeugsitzen integriert sind, welche in einem Frontbereich des Kraftfahrzeugs angeordnet sind.

Ferner ist es bekannt, einen Fahrzeuginnenraum des Kraftfahrzeugs mit einer gedämpften Ambientebeleuchtung zu versehen, wobei zur Ambienteausgabe ausgebildete Beleuchtungseinrichtungen, die insbesondere in Komponenten einer Innenraumverkleidung des Kraftfahrzeugs integriert sind und beispielsweise eine Vielzahl von Leuchtdioden umfassen, vorgesehen sind. Mittels der Ambienteausgabe ist der Fahrzeuginnenraum schwach beleuchtbar, um die Fahrt im Kraftfahrzeug komfortabel zu gestalten.

Aus der gattungsbildende Druckschrift US 2011/0006892 A1 ist ein elektronisches Armaturenbrett für ein Kraftfahrzeug bekannt, das ein biegbares Informationsdisplay umfasst, das sich entlang der Kontur des Kraftfahrzeugs erstreckt. Instrumentenanzeigen werden nicht notwendigerweise statisch dargestellt, sondern der Anzeigeort, die Größe und die Farbe der dargestellten Informationen kann in Echtzeit angepasst werden. Dies kann in Abhängigkeit von Benutzereinstellungen und/oder von Betriebsbedingungen des Kraftfahrzeugs erfolgen. Die Informationsanzeige auf dem Display kann ihre Farbe wechseln oder selbstdimmend sein.

Die Druckschrift DE 100 39 131 A1 offenbart ein Kraftfahrzeug mit einem als Bildschirm ausgebildeten Fenster. Insbesondere kann die Windschutzscheibe als durchsichtiger Bildschirm dienen, wobei entlang des gesamten Außenrandes der Windschutzscheibe eine Menüleiste mit fixer oder einstellbarer Breite vorgesehen ist.

Ein lernendes und vorausschauendes Mensch-Maschine-Interface ist aus der Druckschrift US 2011/0144857 A1 bekannt. Durch eine Steuereinrichtung wird ein Steuersignal bereitgestellt, das die visuelle Darstellung von Daten in Abhängigkeit eines Kraftfahrzeuginformationssignals steuert. Eine Darstellungsform auf einem Display kann somit in Abhängigkeit der verfügbaren Informationen angepasst werden.

Ausgehend von diesem Stand der Technik ist es Aufgabe der vorliegenden Erfindung, ein verbessertes Verfahren zur Anzeige der Informationen im Fahrzeuginnenraum anzugeben, welches komfortabel und flexibel auf die Wünsche des Fahrzeuginsassen angepasst werden kann.

Die Aufgabe wird gelöst durch ein Verfahren der eingangs genannten Art, wobei der nicht bei der Anzeige der Information genutzte Bereich der Anzeigeeinrichtung zur Darstellung einer Ambienteausgabe angesteuert wird, wobei der Fahrzeuginnenraum bei der Ambienteausgabe sanft mit Licht geringer Intensität beleuchtet wird.

Die Anzeigeeinrichtung ist benutzerseitig konfigurierbar. Dazu kann insbesondere die räumliche Ausdehnung und die Anordnung des zur Anzeige der Information vorgesehenen Unterbereichs entlang der zumindest einen horizontalen Richtung benutzerseitig frei vorgegeben werden. Dies ermöglicht Fahrzeuginsassen die Nutzung der Anzeigeeinrichtung zu Unterhaltungs- und/oder Informationszwecken, wobei die Lage des die Information anzeigenden Unterbereichs derart flexibel konfiguriert werden kann, dass insbesondere eine Ablenkung eines Fahrers während der Fahrt minimiert ist. Die Fahrzeuginsassen müssen somit aus Gründen der Fahrsicherheit auf die Ausgabe von Unterhaltungsmedien, wie insbesondere Filmen, während der Fahrt nicht verzichten.

Beispielsweise erstreckt sich die Anzeigeeinrichtung in horizontaler Richtung über eine gesamte Fahrzeugbreite und wird somit von mehreren Fahrzeuginsassen gleichzeitig benutzt. In einem bevorzugten Ausführungsbeispiel der Erfindung erstreckt sich die Anzeigeeinrichtung im Frontbereich des Fahrzeuginnenraums über einen Bereich eines Fahrersitzes und eines Beifahrersitzes. Zur Anzeige der Information teilen sich somit der Fahrer und ein Beifahrer die gemeinsame Anzeigeeinrichtung. Wünscht beispielsweise der Beifahrer die Wiedergabe eines Filmes, so ermöglicht die Konfigurierbarkeit der Anzeigeeinrichtung in horizontaler Richtung, dass der entsprechende Medieninhalt nur auf dem dem Beifahrersitz zugeordneten Unterbereich der Anzeigeeinrichtung ausgegeben wird. Der dem Fahrersitz zugeordnete Bereich der Anzeigeeinrichtung bleibt dabei ungenutzt. Somit ist erreicht, dass die Wiedergabe des Filmes außerhalb des Gesichtfelds des Fahrers erfolgt, sodass eine Beeinträchtigung der Aufmerksamkeit des Fahrers insbesondere während der Fahrt minimiert ist. Dies erhöht die Sicherheit der Fahrzeuginsassen, die jedoch auf Unterhaltung während der Fahrt nicht verzichten müssen.

Der Bereich der Anzeigeeinrichtung, welcher nicht bei der Anzeige der Information genutzt wird, wird zur Darstellung einer Ambienteausgabe angesteuert. Bei der Ambienteausgabe wird der Fahrzeuginnenraum beispielsweise sanft mit Licht geringer Intensität beleuchtet. Das sanfte Ausstrahlen des Fahrzeuginnenraums mit gedämpftem Licht beeinträchtigt die Aufmerksamkeit des Fahrers nicht oder nur geringfügig. Gleichzeitig ermöglicht die gedämpfte Beleuchtung des Fahrzeuginnenraums mittels der Ambienteausgabe insbesondere bei Nachtfahrten eine komfortable Adaption des Sehvermögens des Fahrers auf die verminderten Sichtverhältnisse, sodass eine frühzeitige Ermüdung vermieden werden kann. Die Verwendung einer Anzeigeeinrichtung zur gleichzeitigen Anzeige der Information und zur Darstellung der Ambienteausgabe spart zusätzlich wertvollen Bauraum im Fahrzeuginnenbereich ein.

Besonders bevorzugterweise erfolgt die Darstellung der Ambienteausgabe in Form eines zeitlich veränderlichen Musters. Dazu wird der bei der Anzeige der Information nicht genutzte Bereich der Anzeigeeinrichtung dynamisch angesteuert.

Zur Anzeige einer weiteren Information in einem weiteren horizontalen Unterbereich der Anzeigeeinrichtung wird dieser mittels einer weiteren benutzerseitigen Bedienvorgabe bestimmt. Dabei wird eine Position des weiteren Unterbereichs zumindest entlang der horizontalen Richtung vorgegeben. Zur Anzeige der weiteren Information wird der weitere Unterbereich entsprechend selektiv angesteuert. Das Verfahren zur Anzeige der Information ermöglicht eine vielfältige Nutzung der Anzeigeeinrichtung insbesondere zur Fahrzeuginsassenunterhaltung. Die im Unterbereich angezeigte Information und die im weiteren Unterbereich der Anzeigeeinrichtung angezeigte weitere Information ist benutzerseitig vorgebbar, sodass die Anzeigevorrichtung insbesondere von mehreren Fahrzeuginsassen gleichzeitig zu unterschiedlichen Zwecken genutzt werden kann, ohne dass auf individuelle Wünsche verzichtet werden muss. Das Verfahren zur Anzeige der Information ist besonders dazu geeignet, in einem Fahrerassistenzsystem oder in einem Infotainment-System des Kraftfahrzeugs implementiert zu werden. Beispielsweise kann im Unterbereich, der einem Beifahrersitz zugeordnet ist, eine Mediendatei ausgegeben werden, wobei gleichzeitig in dem dem Fahrersitz zugeordneten weiteren Unterbereich der Anzeigeeinrichtung Fahranweisungen eines Navigationssystems des Kraftfahrzeugs angezeigt werden.

Vorzugsweise erfolgt die Bedienvorgabe und/oder die weitere Bedienvorgabe über eine Bedieneinrichtung, welche als berührungssensitives Display (touchscreen) in die Anzeigeeinrichtung integriert ist. Insbesondere die Wahl der Lage des Unterbereichs kann damit auf besonders intuitive Weise mittels entsprechenden Fingerbewegungen erfolgen. Ferner spart eine derartige Ausgestaltung der Anzeigeeinrichtung mit integrierter Bedieneinrichtung auf vorteilhafte Weise zusätzlichen Bauraum im Fahrzeuginnenraum ein, der anderweitig für eine externe Bedieneinrichtung genutzt werden müsste.

Die Bedienvorgabe und/oder die weitere Bedienvorgabe erfolgt in einem weiteren Ausführungsbeispiel über eine Tastatur. Alternativ oder zusätzlich erfolgt die Bedienvorgabe und/oder die weitere Bedienvorgabe mittels einer Spracherkennung, sodass insbesondere der Fahrer die Ansteuerung der Anzeigeeinrichtung auf besonders bequeme und einfache Weise während der Fahrt verändern kann.

Vorzugsweise ist die Information und/oder die weitere Information einem Medieninhalt, insbesondere einer Wiedergabe eines Films oder einer Audiodatei zugeordnet. Somit ist vorgesehen, dass als Information und/oder als weitere Information Musiktitel oder Interpreten eines gerade abgespielten Musikstücks im Unterbereich oder im weiteren Unterbereich der Ausgabeeinrichtung ausgegeben werden.

In einem bevorzugten Ausbildungsbeispiel der Erfindung wird fahrzeugseitig ein die Information und/oder die weitere Information enthaltendes terrestrisches oder satellitenbasiertes Signal empfangen. Insbesondere können so Fernsehsendungen und/oder Radiosendungen empfangen werden. Bei digitalen Radiosendungen wird typischerweise die den Medieninhalt beinhaltende Datei zusammen mit Metadaten versendet, die insbesondere Informationen über den Titel des Musikstücks oder des Interpreten enthalten. Entsprechend wird bei der Wiedergabe der Audiodatei der Name des Interpreten oder der Titel des wiedergegebenen Musikstücks als Information und/oder als weitere Information ausgegeben.

Ferner wird die Aufgabe gelöst durch ein Kraftfahrzeug, welches zur Durchführung des Verfahrens zur Anzeige der Information ausgebildet ist. Für das Kraftfahrzeug gilt das für das Verfahren bereits Erläuterte entsprechend. Das Kraftfahrzeug umfasst die zumindest eine sich in zumindest der horizontalen Richtung erstreckende, Licht emittierende Anzeigeeinrichtung, zumindest eine für die Bedienvorgabe vorgesehene Bedieneinrichtung und zumindest eine die Anzeigeeinrichtung ansteuernde Steuereinrichtung. Die Bedieneinrichtung ist zur Erfassung der benutzerseitigen Bedienvorgabe mit der Steuereinheit verbunden, sodass die Anzeige der Information benutzerseitig konfigurierbar ist. Dabei ist der zur Anzeige der Information vorgesehene Unterbereich benutzerseitig vorgebbar. Beispielsweise weist die Anzeigeeinrichtung eine Benutzeroberfläche auf, die die Konfigurierung des Unterbereichs als rechteckiges Fenster (window) ermöglicht. Lage und/oder Ausdehnung des Fensters auf der Anzeigeeinrichtung sind benutzerseitig frei vorgebbar.

In einem bevorzugten Ausführungsbeispiel der Erfindung verläuft die horizontale Richtung, in der sich die Anzeigeeinrichtung erstreckt, parallel zur Fahrzeugquerachse. In einem alternativen Ausführungsbeispiel verläuft die horizontale Richtung parallel zur Fahrzeuglängsachse. Vorzugsweise erstreckt sich die horizontale Ausdehnung der Anzeigeeinrichtung über mehrere Bereiche, die verschiedenen Fahrzeuginsassen zugeordnet sind. Dies ermöglicht eine gemeinsame Nutzung der Anzeigeeinrichtung von mehreren Fahrzeuginsassen. Bei einer Ausrichtung der Anzeigeeinrichtung entlang der Fahrzeugquerachse ist insbesondere vorgesehen, dass die Anzeigeeinrichtung vom Fahrer und vom Beifahrer gemeinsam genutzt wird. Bei der entlang der Fahrzeuglängsachse verlaufenden Ausführungsform kann die Anzeigeeinrichtung gemeinsam von einem im Frontbereich des Kraftfahrzeugs Platz nehmenden Fahrzeuginsassen und von einem in Fondbereich des Kraftfahrzeugs Platz nehmenden Fahrzeuginsassen gleichzeitig genutzt werden. Damit ist auf besonders vorteilhafte Weise wertvoller Bauraum eingespart.

Die Anzeigeeinrichtung ist in einem Ausführungsbeispiel den Fahrzeuginnenraum zumindest teilweise randseitig umlaufend angeordnet. Die so ausgebildete Anzeigeeinrichtung erstreckt sich somit sowohl parallel zur Fahrzeugquer- als auch zur Fahrzeuglängsachse. Insbesondere bei einem als Personenkraftfahrzeug ausgebildeten Kraftfahrzeug ist so ermöglicht, dass ein Großteil der Fahrzeuginsassen gemeinsam die Anzeigeeinrichtung zur Anzeige der Information, der weiteren Information und/oder zur Ambienteausgabe gemeinsam nutzen können. Insbesondere kann die Anzeigeeinrichtung im Bereich einer Fahrzeugsäule wie einer A-, B- oder C-Säule angeordnet sein.

Vorzugsweise ist die Anzeigeeinrichtung bandförmig ausgebildet, weist somit eine vertikale Ausdehnung auf, die wesentlich kleiner als die horizontale Ausdehnung ist. Die Anzeigeeinrichtung ist zumindest einem Fahrzeugfenster, insbesondere einer Windschutzscheibe des Kraftfahrzeugs randseitig benachbart angeordnet. Die so ausgebildete Anzeigeeinrichtung ermöglicht die Ausgabe der Information beispielsweise in Form von Laufschrift im dazu bestimmten Unterbereich. Die Anzeigeeinrichtung ist beispielsweise als Scheibenwurzeldisplay ausgeführt und in einer der Windschutzscheibe randseitig benachbart angeordneter Innenverkleidung integriert. Die im Unterbereich der Anzeigeeinrichtung angezeigte Information befindet sich im peripheren Sichtfeld des Fahrers, sodass eine Ablenkung des Fahrers durch die Anzeige während der Fahrt minimiert ist.

In einem besonders bevorzugten Ausführungsbeispiel der Erfindung ist die zumindest eine für die Bedienvorgabe vorgesehene Bedieneinrichtung in der Anzeigeeinrichtung als berührungssensitives Display integriert. Das berührungssensitive Display stellt eine haptische Benutzerschnittstelle dar, die eine besonders intuitive Bedienung und Konfiguration der Anzeigeeinrichtung ermöglicht. Beispielsweise können mittels einer entsprechenden Bewegung die auf der Benutzeroberfläche der Anzeigeeinrichtung generierten und den Unterbereich und den weiteren Unterbereich definierende Fenster insbesondere in horizontaler Richtung verschoben werden.

In einem weiteren vorteilhaften Ausführungsbeispiel der Erfindung weist das Kraftfahrzeug eine Empfangseinrichtung auf, die dazu ausgebildet ist, das terrestrische oder das Satelliten basierte Signal zu empfangen. Die Empfangseinrichtung ist mit der zumindest einen Steuereinrichtung verbunden, sodass die Information und/oder die weitere Information, welche im terrestrischen oder im Satelliten basierten Signal enthalten ist, kraftfahrzeugseitig ausgebbar ist. Die Empfangseinrichtung ist dazu ausgebildet, digitale und/oder analoge Signale zu empfangen, wie insbesondere digitale und/oder analoge Radio- und/oder Fernsehsignale.

Vorteilhafterweise weist die Anzeigeeinrichtung zusätzlich Mittel zur Ausgabe eines akustischen Signals auf, sodass die Wiedergabe von Medieninhalten, wie Filmen, Audiodateien, Musikstücken oder Ähnlichem ermöglicht ist.

Die Anzeigeeinrichtung ist in einem Ausführungsbeispiel als Flüssigkristallanzeigeeinrichtung (LCD, liquid crystal display) ausgeführt. Die Anzeigeeinrichtung weist ein optisches Auflösevermögen auf, das zur Darstellung von Filmen, Fernsehsendungen oder Computerspielen geeignet ist.

Weitere Vorteile und Einzelheiten der Erfindung werden im Folgenden anhand von Ausführungsbeispielen und unter Bezugnahme auf die Zeichnungen erläutert. Dabei zeigen:
- Fig. 1: ein erfindungsgemäßes Kraftfahrzeug, das zur Durchführung des erfindungsgemäßen Verfahrens ausgebildet ist und eine Anzeigeeinrichtung aufweist, die sich in horizontaler Richtung über eine gesamte Fahrzeugbreite erstreckt,
- Fig. 2: ein weiteres Ausführungsbeispiel des Kraftfahrzeugs mit einer Anzeigeeinrichtung, die einen Fahrzeuginnenraum teilweise randseitig umlaufend angeordnet ist,
- Fig. 3: ein weiteres Ausführungsbeispiel des Kraftfahrzeugs mit einer Anzeigeeinrichtung, die den Fahrzeuginnenraum randseitig vollständig umlaufend angeordnet ist, und
- Fig. 4: eine perspektivische Ansicht eines frontseitigen Bereichs des Fahrzeuginnenraums.

Einander entsprechende Teile sind in allen Fig. mit den gleichen Bezugszeichen versehen.

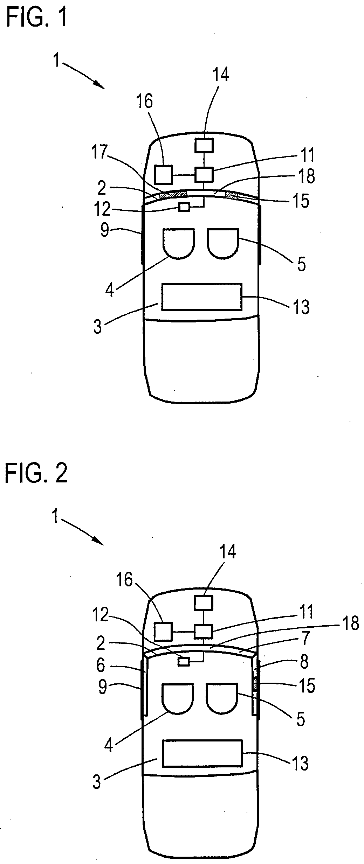

Fig. 1 zeigt ein Kraftfahrzeug 1, welches eine Anzeigeeinrichtung 2 aufweist, die sich parallel zu einer Fahrzeugquerachse in einer horizontalen Richtung über eine gesamte Fahrzeugbreite des Kraftfahrzeugs erstreckt. Die Anzeigeeinrichtung 2 ist als Flüssigkristallanzeigeeinrichtung (englisch: liquid crystal display) ausgeführt und an einer Windschutzscheibe des Kraftfahrzeugs 1 randseitig benachbart angeordnet. Die Anzeigeeinrichtung 2 erstreckt sich über die gesamte Fahrzeugbreite und somit über einen einem Fahrersitz 4 zugeordneten Bereich und über einen einem Beifahrersitz 5 zugeordneten, weiteren Bereich. Zur Anzeige der Information teilen sich somit ein Fahrer und ein Beifahrer die gemeinsame Anzeigeeinrichtung 2.

Fig. 2 zeigt ein zweites Ausführungsbeispiel des Kraftfahrzeugs 1, welches eine Anzeigeeinrichtung 2 aufweist, die sich sowohl parallel zur Fahrzeugquerachse als auch parallel zu einer Fahrzeuglängsachse erstreckt. Die Anzeigeeinrichtung 2 ist abschnittsweise von jeweils drei Anzeigeelementen 6, 7, 8 gebildet, die als Displays ausgeführt sind. Zwei der Anzeigeelemente 6, 8 erstrecken sich teilweise über eine Breite einer jeweiligen Fahrzeugtür 9.

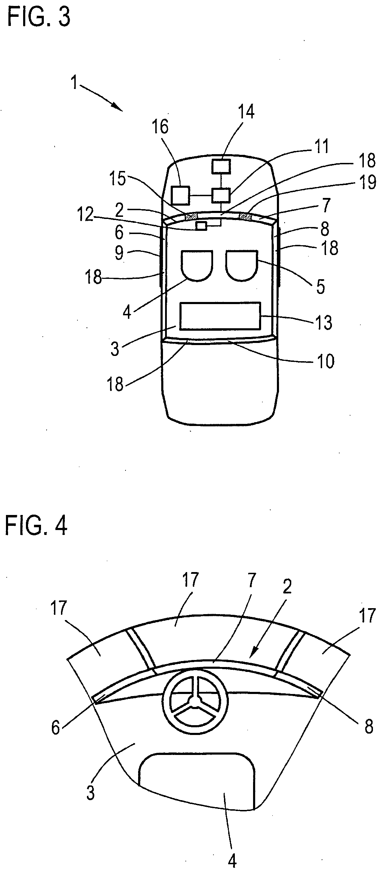

Fig. 3 zeigt ein drittes Ausführungsbeispiel des Kraftfahrzeugs 1, wobei eine Anzeigeeinrichtung 2 vorgesehen ist, die den gesamten Fahrzeuginnenraum 3 randseitig umläuft. Dabei ist die Anzeigeeinrichtung 2 abschnittsweise von Anzeigeelementen 6, 7, 8, 10 gebildet.

Die in den Fig. 1 bis 3 gezeigten Ausführungsbeispiele der Erfindung weisen jeweilige Steuereinheiten 11 auf, die dazu ausgebildet sind, die jeweilige Anzeigeeinrichtung 2 anzusteuern. Die Steuereinheit 11 ist mit einer Bedieneinrichtung 12 verbunden, mittels der eine benutzerseitige Bedienvorgabe erfassbar ist. In nicht näher dargestellter Weise sind mehrere Bedieneinrichtungen 12 vorgesehen, welche entsprechend in den Bereichen der Fahrzeugsitze 4, 5 und/oder im Bereich einer Rücksitzbank 13 zur Erfassung der Bedienvorgabe angeordnet sind.

In einem bevorzugten Ausführungsbeispiel ist die Bedieneinrichtung 12 in der Anzeigeeinrichtung 2 als berührungssensitives Display integriert.

In einem alternativen Ausführungsbeispiel ist die Bedieneinrichtung 12 als eine eine Tastatur umfassende Konsole ausgebildet.

Zusätzlich ist in nicht näher dargestellter Weise eine Spracherkennungseinheit vorgesehen, welche eine als Software implementierte Spracherkennung aufweist, sodass die Bedienvorgabe oder eine weitere Bedienvorgabe als akustisches Signal erfassbar ist.

Eine Empfangseinrichtung 14 steht in einer Wirkverbindung mit der Steuereinheit 11. Mittels der Empfangseinrichtung 14 ist ein terrestrisches oder ein Satelliten basiertes Signal empfangbar, welches die anzuzeigende Information enthält. Die so empfangene Information ist auf einen Unterbereich 15 der Anzeigeeinrichtung 2 ausgebbar, wobei eine entsprechende Ansteuerung der Anzeigeeinrichtung 2 mittels der Steuereinheit 11 erfolgt.

Ferner ist die Steuereinheit 11 mit einer Speichereinheit 16 verbunden, auf der Medieninhalte beispielsweise in Form von Audio- und Filmdateien hinterlegbar sind. Die im Unterbereich 15 darzustellende Information kann insbesondere dem Medieninhalt zugeordnet sein. Dazu kann beispielsweise ein Interpret und/oder ein Titel eines Musikstücks zeitgleich bei dessen Wiedergabe im Unterbereich 15 angezeigt werden. Entsprechend weist in nicht näher dargestellter Weise die Anzeigeeinrichtung 2 Mittel zur Ausgabe eines akustischen Signals auf, sodass die Wiedergabe der Medieninhalte ermöglicht ist.

Fig. 4 zeigt in einer perspektivischen Ansicht einen frontseitigen Bereich des Fahrzeuginnenraums 3. Die Anzeigeeinrichtung 2, die durch die Anzeigeelemente 6, 7, 8 gebildet ist, umläuft den Fahrzeuginnenraum 3 teilweise. Dabei sind die Anzeigeelemente 6, 7, 8 randseitig an Fahrzeugfenstern 17 angeordnet. Das die Anzeigeeinrichtung 2 abschnittsweise bildende Anzeigeelement 7 befindet sich bei normalem Betrieb im Sichtfeld des Fahrers, sodass dort dargestellte Information vom Fahrer bei Bedarf leicht wahrzunehmen sind, ohne dass dieser seinen Blick wesentlich von der Fahrtrichtung abwenden muss.

Zusätzlich ist die Anzeigeeinrichtung 2 zur Darstellung einer Ambienteausgabe ausgebildet, bei der der Fahrzeuginnenraum 3 sanft mit Licht geringer Intensität beleuchtet wird.

Bei einem Verfahren zur Anzeige der Information im Fahrzeuginnenraum 3 wird in einem ersten Verfahrensschritt mittels der benutzerseitigen Bedienvorgabe der Unterbereich 15 bestimmt. Dabei weist der Unterbereich 15 eine geringere räumliche Ausdehnung als die Anzeigeeinrichtung 2 auf. Die räumliche Ausdehnung des Unterbereichs 15 und dessen räumliche Anordnung auf der Anzeigeeinrichtung 2 wird mittels der Bedienvorgabe vorgegeben.

In einem Ausführungsbeispiel der Erfindung wird bei der Bestimmung des Unterbereichs 15 auf einer Benutzeroberfläche der Anzeigeeinrichtung 2 ein Fenster generiert, in dem die Information in einem zweiten Verfahrensschritt ausgegeben wird. Das Fenster kann insbesondere in horizontaler Richtung verschoben werden, sodass eine Ablenkung des Fahrers minimiert werden kann. Als anzuzeigende Information ist beispielsweise die Wiedergabe von Filmen und/oder Computerspielen vorgesehen.

Bei der Anzeige der Information verbleibt ein nicht genutzter Bereich 18 der Anzeigeeinrichtung 2, der zur Darstellung der Ambienteausgabe angesteuert wird. Als Ambienteausgabe wird ein zeitlich veränderliches Muster, wie beispielsweise ein sanftes Wellenmuster, ausgegeben. Dazu wird die Anzeigeeinrichtung 2 von der Steuereinheit 11 entsprechend dynamisch angesteuert.

Auch die Darstellung der Information im Unterbereich 15 kann zeitlich veränderlich, beispielsweise in Form einer Laufschrift erfolgen.

Bei einem möglichen Ausführungsbeispiel des Verfahrens zur Anzeige der Information wird in einem dem Fahrersitz 4 zugeordneten Bereich der Anzeigeeinrichtung 2 eine digitale Straßenkarte als Navigationshilfe im Unterbereich 15 angezeigt. Gleichzeitig wird in einem dem Beifahrersitz 5 zugeordneten Bereich der Anzeigeeinrichtung 2 in einem weiteren Unterbereich 19 eine weitere Information angezeigt, die einer Wiedergabe eines Films entspricht. Lage und Größe des weiteren Unterbereichs 19 werden mittels der weiteren Bedienvorgabe bestimmt. Der gesamte, nicht genutzte Bereich 18 der Anzeigeeinrichtung 2 wird zeitgleich zur Ambienteausgabe genutzt. Das Verfahren zur Anzeige der Information ist im Rahmen eines Infotainment-Systems implementiert. Die angezeigte Information bzw. die angezeigte weitere Information können die Wiedergabe von Newstickern, Wetterinformationen, Podcast und/oder Medieninhalten entsprechen. Die freie Konfigurierbarkeit der Anzeige in dem Unterbereich 15 bzw. in dem weiteren Unterbereich 19 ermöglicht die gemeinsame Nutzung der Anzeigeeinrichtung 2 von mehreren Fahrzeuginsassen, die entsprechend auf dem Fahrersitz 4, auf dem Beifahrersitz 5 oder auf der Rücksitzbank 13 Platz nehmen können.

Es versteht sich, dass die gezeigten Figuren das erfindungsgemäße Kraftfahrzeug und das erfindungsgemäße Verfahren lediglich illustrieren und nicht einschränkend aufzufassen sind. Kombinationen der einzelnen Ausführungsbeispiele sind ebenso im Rahmen der vorliegenden Erfindung, wie die Anzeige von andersartigen Informationen im Unterbereich 14, die beispielsweise beim Betrieb eines als Einparkhilfe, Totwinkelassistent, Abstandswarner oder Fußgängerschutzsystem ausgebildetes Fahrerassistenzsystem generiert werden.

## Patentansprüche

1. Verfahren zur Anzeige einer Information in einem Fahrzeuginnenraum (3) mittels einer Anzeigeeinrichtung (2) eines Kraftfahrzeugs (1), wobei zur Anzeige der Information auf der sich in zumindest eine horizontale Richtung erstreckenden Anzeigeeinrichtung (2) mittels einer benutzerseitigen Bedienvorgabe zumindest ein horizontaler, eine geringere räumliche Ausdehnung als die Anzeigeeinrichtung (2) aufweisender Unterbereich (15) der Anzeigeeinrichtung (2) bestimmt wird, dessen Position auf der Anzeigeeinrichtung (2) zumindest entlang der horizontalen Richtung benutzerseitig mittels der Bedienvorgabe vorgegeben wird, wobei der zumindest eine Unterbereich (15) zur Anzeige der Information selektiv angesteuert wird,
**dadurch gekennzeichnet,**
**dass** der nicht bei der Anzeige der Information genutzte Bereich (18) der Anzeigeeinrichtung (2) zur Darstellung einer Ambienteausgabe angesteuert wird, wobei der Fahrzeuginnenraum (3) bei der Ambienteausgabe sanft mit Licht geringer Intensität beleuchtet wird.

2. Verfahren nach Anspruch 1 ,
**dadurch gekennzeichnet,**
**dass** der nicht bei der Anzeige der Information genutzte Bereich (18) der Anzeigeeinrichtung (2), insbesondere zur Darstellung eines zeitlich veränderlichen Musters, dynamisch angesteuert wird.

3. Verfahren nach Anspruch 1 oder 2,
**dadurch gekennzeichnet,**
**dass** zur Anzeige einer weiteren Information ein weiterer horizontaler Unterbereich (19) der Anzeigeeinrichtung mittels einer weiteren benutzerseitigen Bedienvorgabe bestimmt wird, wobei eine Position des weiteren Unterbereichs (19) auf der Anzeigeeinrichtung (2) zumindest entlang der horizontalen Richtung vorgegeben wird und der weitere Unterbereich (19) zur Anzeige der weiteren Information selektiv angesteuert wird.

4. Verfahren nach einem der vorherigen Ansprüche,
**dadurch gekennzeichnet,**
**dass** die Information und/oder die weitere Information einem Medieninhalt, insbesondere einer Wiedergabe eines Films oder einer Audiodatei zugeordnet ist.

5. Verfahren nach einem der vorherigen Ansprüche,
**dadurch gekennzeichnet,**
**dass** zur Anzeige der Information und/oder der weiteren Information ein die Information und/oder die weitere Information enthaltendes terrestrisches oder satellitenbasiertes Signal kraftfahrzeugseitig empfangen wird.

6. Kraftfahrzeug (1), welches zur Durchführung eines Verfahrens nach einem der vorangegangenen Ansprüche ausgebildet ist, umfassend zumindest eine sich in zumindest eine horizontale Richtung erstreckende, lichtemittierende Anzeigeeinrichtung (2), zumindest eine Bedieneinrichtung (12) und zumindest eine die Anzeigeeinrichtung (2) ansteuernde Steuereinheit (11), wobei die Bedieneinrichtung (12) zur Erfassung einer benutzerseitigen Bedienvorgabe ausgebildet ist und mit der Steuereinheit (11) verbunden ist.

7. Kraftfahrzeug (1) nach Anspruch 6,
**dadurch gekennzeichnet,**
**dass** zumindest eine der horizontalen Richtungen parallel zu einer Fahrzeugquer- oder Fahrzeuglängsachse verläuft.

8. Kraftfahrzeug (1) nach Anspruch 6 oder 7,
**dadurch gekennzeichnet,**
**dass** die Anzeigeeinrichtung (2) einen Fahrzeuginnenraum (3) zumindest teilweise randseitig umlaufend angeordnet ist.

9. Kraftfahrzeug (1) nach einem der Ansprüche 6 bis 8,
**dadurch gekennzeichnet,**
**dass** die Anzeigeeinrichtung (2) zumindest einem Fahrzeugfenster (17), insbesondere einer Windschutzscheibe randseitig benachbart angeordnet ist.

10. Kraftfahrzeug (1) nach einem der Ansprüche 6 bis 9,
**dadurch gekennzeichnet,**
**dass** die zumindest eine Bedieneinrichtung (12) in der Anzeigeeinrichtung (2) als berührungssensitives Display integriert ist.

11. Kraftfahrzeug (1) nach einem der Ansprüche 6 bis 10,
**dadurch gekennzeichnet,**
**dass** eine Empfangseinrichtung (14), mittels der ein terrestrisches oder satellitenbasiertes Signal empfangbar ist, mit der zumindest einen Steuereinheit (11) verbunden ist.

12. Kraftfahrzeug nach einem der Ansprüche 6 bis 11,
**dadurch gekennzeichnet,**
**dass** die Steuereinheit (11) mit einer Speichereinheit (16), auf der Medieninhalte hinterlegbar sind, verbunden ist.

13. Kraftfahrzeug (1) nach einem der Ansprüche 8 bis 12,
**dadurch gekennzeichnet,**
**dass** die Anzeigeeinrichtung (2) zusätzlich Mittel zur Ausgabe eines akustischen Signals aufweist.

14. Kraftfahrzeug (1) nach einem der Ansprüche 8 bis 13,
**dadurch gekennzeichnet,**
**dass** die Anzeigeeinrichtung (2) eine Flüssigkristallanzeigeeinrichtung ist.

## Claims

1. Method for displaying information in a vehicle interior (3) by means of a display device (2) of a vehicle (1), wherein in order to display the information on the display device (2) extending at least in a horizontal direction by means of a user-side operating input, at least one horizontal lower region (15) of the display device (2) having a smaller spatial extension than the display device (2) is determined, the position of which on the display device (2), at least along the horizontal direction, is predetermined on the user side by means of the operating input, wherein the at least one lower region (15) is selectively controlled to display the information,
**characterised in that**
the region (18) of the display device (2) not used to display the information is controlled to depict an ambience output, wherein the vehicle interior (3) is softly illuminated with light of lower intensity by the ambience output.

2. Method according to claim 1,
**characterised in that**
the region (18) of the display device (2) not used in the display is dynamically controlled to depict, in particular, a temporally changing pattern.

3. Method according to claim 1 or 2,
**characterised in that**
in order to display further information a further horizontal lower region (19) of the display device is determined by means of a further user-side operating input, wherein a position of the further lower region (19) on the display device (2) is predetermined at least along the horizontal direction, and the further lower region (19) is selectively controlled to display further information.

4. Method according to any one of the preceding claims,
**characterised in that**
the information and/or the further information is allocated to a media content, in particular to a playback of a film or an audio data file.

5. Method according to one of the preceding claims,
**characterised in that**
in order to display the information and/or the further information, a terrestrial or satellite-based signal containing the information and/or the further information is received on the vehicle.

6. Vehicle (1), which is configured to carry out a method according to any one of the preceding clams, comprising at least one light-emitting display device (2) extending at least in a horizontal direction, at least one operating device (12) and at least one control unit (11) controlling the display device (2), wherein the operating device (12) is configured to recognise a user-side operating input and is connected to the control unit (11).

7. Vehicle (1) according to claim 6,
**characterised in that**
at least one of the horizontal directions runs parallel to a vehicle transverse axis or vehicle longitudinal axis.

8. Vehicle (1) according to claim 6 or 7,
**characterised in that**
the display device (2) is arranged running at least partially around the edge of the vehicle interior (3).

9. Vehicle (1) according to any one of claims 6 to 8,
**characterised in that**
the display device (2) is arranged at least adjacent to the edge of a vehicle window (17), in particular a windscreen.

10. Vehicle (1) according to any one of claims 6 to 9,
**characterised in that**
the at least one operating device (12) is integrated in the display device (2) as a touch-sensitive display.

11. Vehicle (1) according to any one of claims 6 to 10,
**characterised in that**
the receiving device (14), by means of which a terrestrial or satellite-based signal can be received, is connected to the at least control unit (11).

12. Vehicle (1) according to any one of claims 6 to 11,
**characterised in that**
the control unit (11) is connected to a memory unit (16) on which media content can be stored.

13. Vehicle (1) according to any one of claims 8 to 12,
**characterised in that**
the display device (2) has, in addition, means for outputting an acoustic signal.

14. Vehicle (1) according to any one of claims 8 to 13,
**characterised in that**
the display device (2) is a liquid crystal display device.

## Revendications

1. Procédé pour l'affichage d'une information dans un habitacle de véhicule (3) au moyen d'un dispositif d'affichage (2) d'un véhicule automobile (1), au moins une sous-zone (15) horizontale du dispositif d'affichage (2) étant déterminée au moyen d'une instruction de commande donnée par un utilisateur pour l'affichage de l'information sur le dispositif d'affichage (2) s'étendant dans au moins une direction horizontale, laquelle sous-zone inférieure présente un allongement spatial inférieur à celui du dispositif d'affichage (2) et dont la position sur le dispositif d'affichage (2) est prescrite au moins le long de la direction horizontale au moyen de l'instruction de commande donnée par l'utilisateur, l'au moins une sous-zone (15) étant commandée sélectivement pour l'affichage de l'information,
**caractérisé en ce**
**que** la zone (18) du dispositif d'affichage (2) qui n'est pas utilisée lors de l'affichage de l'information est commandée pour représenter une sortie d'ambiance, l'habitacle de véhicule (3) étant doucement éclairé avec une lumière de faible intensité lors de la sortie d'ambiance.

2. Procédé selon la revendication 1,
**caractérisé en ce**
**que** la zone (18) du dispositif d'affichage (2) qui n'est pas utilisée lors de l'affichage de l'information est commandée de façon dynamique, notamment pour représenter un motif variable dans le temps.

3. Procédé selon la revendication 1 ou 2,
**caractérisé en ce**
**que**, pour l'affichage d'une autre information, une autre sous-zone (19) horizontale du dispositif d'affichage est déterminée au moyen d'une autre instruction de commande donnée par l'utilisateur, une position de l'autre sous-zone (19) sur le dispositif d'affichage (2) étant prescrite au moins le long de la direction horizontale et l'autre sous-zone (19) étant commandée sélectivement pour l'affichage de l'autre information.

4. Procédé selon l'une quelconque des revendications précédentes,
**caractérisé en ce**
**que** l'information et/ou l'autre information est associée à un contenu de média, notamment à une reproduction d'un film ou d'un fichier audio.

5. Procédé selon l'une quelconque des revendications précédentes,
**caractérisé en ce**
**que**, pour l'affichage de l'information et/ou de l'autre information, un signal terrestre ou satellitaire contenant l'information et/ou l'autre information est reçu du côté du véhicule.

6. Véhicule automobile (1), qui est réalisé pour la mise en oeuvre d'un procédé selon l'une quelconque des revendications précédentes, comprenant au moins un dispositif d'affichage (2) qui s'étend dans au moins une direction horizontale et qui émet de la lumière, au moins un dispositif de commande (12) et au moins une unité de commande (11) qui commande le dispositif d'affichage (2), le dispositif de commande (12) étant réalisé pour la détection d'une instruction de commande donnée par un utilisateur et étant relié à l'unité de commande (11).

7. Véhicule automobile (1) selon la revendication 6,
**caractérisé en ce**
**qu'**au moins une des directions horizontales s'étend parallèlement à un axe transversal ou longitudinal de véhicule.

8. Véhicule automobile (1) selon la revendication 6 ou 7,
**caractérisé en ce**
**que** le dispositif d'affichage (2) est agencé de manière à entourer au moins partiellement, du côté du bord, un habitacle de véhicule (3).

9. Véhicule automobile (1) selon l'une quelconque des revendications 6 à 8,
**caractérisé en ce**
**que** le dispositif d'affichage (2) est agencé au voisinage d'au moins une vitre de véhicule (17), en particulier d'un pare-brise, du côté du bord.

10. Véhicule automobile (1) selon l'une quelconque des revendications 6 à 9,
**caractérisé en ce**
**que** l'au moins un dispositif de commande (12) est intégré dans le dispositif d'affichage (2) sous la forme d'un écran tactile.

11. Véhicule automobile (1) selon l'une quelconque des revendications 6 à 10,
**caractérisé en ce**
**qu'**un dispositif de réception (14), au moyen duquel un signal terrestre ou satellitaire peut être reçu, est relié à l'au moins une unité de commande (11).

12. Véhicule automobile selon l'une quelconque des revendications 6 à 11,
**caractérisé en ce**
**que** l'unité de commande (11) est reliée à une unité de mémorisation (16), dans laquelle des contenus de média peuvent être enregistrés.

13. Véhicule automobile (1) selon l'une quelconque des revendications 8 à 12,
**caractérisé en ce**
**que** le dispositif d'affichage (2) présente en supplément des moyens pour délivrer en sortie un signal acoustique.

14. Véhicule automobile (1) selon l'une quelconque des revendications 8 à 13,
**caractérisé en ce**
**que** le dispositif d'affichage (2) est un dispositif d'affichage à cristaux liquides.
